# EUROPÄISCHE PATENTSCHRIFT

(11) **EP 0 948 251 B1**
(45) Veröffentlichungstag und Bekanntmachung des Hinweises auf die Patenterteilung: **18.10.2000**
(21) Anmeldenummer: 96927065.1
(22) Anmeldetag: 31.07.1996
(51) Int. Cl.: A01D 34/68

(54) **SICHERHEITSSCHALTVORRICHTUNG FÜR EIN ELEKTROMOTORISCH ANGETRIEBENES GARTENGERÄT**
SAFETY SWITCHING DEVICE FOR AN ELECTROMOTIVE GARDEN APPLIANCE
DISPOSITIF DE COMMUTATION DE SECURITE POUR UN APPAREIL DE JARDIN A MOTEUR ELECTRIQUE

(30) Priorität: 02.08.1995 DE 19528427
(43) Veröffentlichungstag der Anmeldung: 13.10.1999
(73) Patentinhaber: WOLF-Geräte GmbH Vertriebsgesellschaft KG, D-57518 Betzdorf/Sieg (DE)
(72) Erfinder: WOLF, Gregor, D-57517 Betzdorf (DE)
(74) Vertreter: Koch, Günther, Dipl.-Ing.
(86) Internationale Anmeldenummer: EP9603373
(87) Internationale Veröffentlichungsnummer: WO9704635

(56) Entgegenhaltungen:
- DE-A- 2 626 201
- DE-A- 2 723 561
- DE-A- 3 332 192
- DE-U- 9 409 312
- FR-A- 2 348 644
- US-A- 4 145 864
- US-A- 4 964 265

## Beschreibung

Die Erfindung bezieht sich auf eine Sicherheitsschaltvorrichtung für ein motorisch angetriebenes Gartengerät, z.B. einen Rasenmäher oder einen Vertikutierer mit einem am Führungsgriff angeordneten Betätigungsglied.

Eine solche Sicherheitsschaltvorrichtung ist aus der CH-PS 618 578 der Anmelderin bekannt. Hierbei ist das am Führungsgriff angeordnete Betätigungsglied als Sensorschalter ausgebildet, der eine elektrische Kontaktierung bewirkt, wenn der Führungsgriff bestimmungsgemäß mit der Hand (bzw. mit beiden Händen) erfaßt wird. Diese Betätigungsglieder sind über in der Zeichnung nicht dargestellte Steuerleitungen mit einer Schalteinheit 16 in der Nähe des Motorblocks verbunden. Wie bei den Betätigungsgliedern am Führungsgriff, die direkt auf einen am Führungsgriff angeordneten Netzschalter einwirken, der über elektrische Leitungen mit dem Motor verbunden ist, sind auch die Steuerleitungen bei dem bekannten Gartengerät fliegend angeordnet und so einer Beschädigung ausgesetzt, wenn das Gartengerät an scharfen Kanten oder sonstigen Hindernissen vorbeigeschoben wird oder zur Aufbewahrung abgestellt wird.

Um ein Gartengerät raumsparend bei Nichtgebrauch unterbringen zu können, ist der Führungsbügel in der Regel mit einem Knickgelenk versehen, das die Möglichkeit schafft, den auskragenden Teil des Führungsbügels über den Rasenmäher o.dgl. zu klappen, derart, daß der Raumbedarf im wesentlichen durch die Abmessungen des Chassis bestimmt wird.

Das zum Schalter führende Kabel ist bei derartigen Geräten entlang dem einen Schenkel des Führungsbügels geführt und an diesem durch Schellen festgelegt. Das Kabel muß daher beim Zusammenklappen und Ausfahren des Führungsbügels der Knippbewegung folgen, was auf die Dauer zu einer Beschädigung des Kabels insbesondere dann führen kann, wenn durch Unachtsamkeit das Kabel in die Gelenkteile wiederholt eingequetscht wird.

Die entgegengehaltene US-A-4 964 265 zeigt einen selbstfahrenden, radgetriebener Rasenmäher, der durch einen batteriebetriebenen Motor angetrieben wird. Bei diesem bekannten Rasenmäher ist kein Führungsgriff vorgesehen, weil die Führung des Rasenmähers eine Fernsteuerung übernehmen soll, deren Sender der Bedienungsperson zugeordnet ist und deren Empfänger mit dem selbstfahrenden Rasenmäher vereint ist. Diese Fernsteuerung, die nicht nur die Ein- und Ausschaltung des Motors bewirkt, sondern auch Steuerfunktionen für die Räder ausüben muß, wird bevorzugt von einer Mehrkanal-Fernsteuereinrichtung gebildet, wie sie für ferngesteuerte Modellflugzeuge üblich ist. Das Problem der Motorschaltung von einem Führungsgriff aus liegt hier nicht vor.

Der Erfindung liegt daher die Aufgabe zugrunde, eine gattungsgemäße Sicherheitsschaltvorrichtung für ein Gartengerät derart auszubilden, daß die Schaltfunktion vom Führungsgriff aus sicher gewährleistet bleibt, und die Gefahr einer Beschädigung des Kabels ausgeschlossen ist.

Gelöst wird die gestellte Aufgabe durch die im Kennzeichnungsteil des Patentanspruchs 1 angegebenen Merkmale. Dadurch, daß die Einschaltsignalübertragung drahtlos erfolgt, kann auf ein Kabel zwischen Führungsgriff und Motor verzichtet werden. Die drahtlose Übertragung kann zweckmäßigerweise über Infrarotstrahlung oder ähnliche bekannte Verfahren erfolgen, und für diesen Zweck stehen kommerziell zahlreiche Übertragungseinrichtungen mit kleinsten Abmessungen zur Verfügung, wobei berücksichtigt werden muß, daß der kurzen Entfernung zwischen Sender und Empfänger wegen nur kleinste Energien benötigt werden.

Zweckmäßigerweise wird dabei die Anordnung derart getroffen, daß das dem Empfänger zugeordnete Schaltgerät den Motorkreis geschlossen hält, bis der Empfänger ein zweites, vom Einschaltsignal unterschiedenes, Abschaltsignal empfängt. Dies würde allerdings bedingen, daß bei versehentlicher Unterbrechung des Strahlenganges der Motor auch dann weiterläuft, wenn ein Ausschaltsignal abgestrahlt wird, das den Empfänger nicht erreicht. Diese Gefahr der Unterbrechung besteht bei Infrarotübertragung ebenso wie bei einer Ultraschallübertragung, nicht aber bei einer Funkübertragung.

Aus Sicherheitsgründen kann es daher zweckmäßig sein, den Empfänger so auszubilden, daß er den ihm zugeordneten Schalter nur so lange in Einschaltstellung beläßt, wie er vom Sender das Einschaltsignal empfängt. Eine versehentliche Unterbrechung des Strahlengangs würde dann lediglich zu einer Abschaltung führen, und nach Wegfall der Strahlungsunterbrechung könnte durch ein erneut eingegebenes Einschaltsignal der Motor wieder angelassen werden.

Eine derartige Schaltungsanordnung mit drahtloser Übertragung auf dem Weg zwischen Führungsgriff und Chassis kann auf einfache Weise mit dem für Gartengeräte vorgeschriebenen Totmann-schalter kombiniert werden. Dieser ist gemäß der heutigen Praxis im allgemeinen als Griffbügel ausgebildet, der nach Drücken des Einschalters am Führungsgriff gezogen und mit einer Hand oder beiden Händen gehalten werden muß, um den Stromkreis geschlossen zu halten.

Gemäß einer weiteren Ausgestaltung der Erfindung ist vorgesehen, diesen Totmann-Schalter als Tastschalter bzw. Berührungsschalter am Führungsgriff auszubilden, derart, daß bei Berührung mit der Hand ein Stromkreis geschlossen (oder geöffnet) bleibt, um den Motor angeschaltet zu halten, während ein Loslassen des Führungsgriffs ein sofortiges Abschalten des Motorkreises zur Folge hat, indem entweder der Sender abgeschaltet wird und kein Einschaltsignal mehr liefert oder der Sender veranlaßt wird, ein Abschaltsignal zu liefern.

Die Batterie zur Speisung des Sensors kann einer kleinen Batterie entnommen werden, die im Schaltergehäuse am Führungsgriff zusammen mit dem Sensor untergebracht werden kann.

Der Strahlengang zwischen Sender und Empfänger kann durch einfache Mittel scharf gebündelt werden, so daß eine Übertragung nur dann stattfinden kann, wenn der Führungsbügel in die Arbeitsstellung überführt ist, nicht aber in der zusammengeknickten Stellung. Hierdurch wird die zusätzliche Sicherheitsfunktion erreicht, daß im zusammengeklappten Zustand eine Schaltfunktion am Bügel den Motorstromkreis unbeeinflußt läßt, weil das abgestrahlte Bündel den Empfänger nicht trifft.

Die Erfindung ist sowohl für netzbetriebene Geräte als auch für batteriebetriebene Geräte anwendbar. In entsprechend abgewandelter Form kann die Erfindung auch für Gartengeräte Anwendung finden, die durch eine Brennkraftmaschine angetrieben werden, wobei beispielsweise der Bowdenzug zur Drosselklappenverstellung ersetzt werden kann, der in gleicher Weise beim Einknicken der Führungsbügel Beschädigungen unterworfen werden kann.

## Patentansprüche

1. Motorisch angetriebenes Gartengerät, z.B. ein Rasenmäher oder ein Vertikutierer mit einer Sicherheitsschaltvorrichtung mit einem am Führungsgriff angeordneten Betätigungsglied,
dadurch gekennzeichnet, daß das Betätigungsglied am Führungsgriff mit einem Sender kombiniert ist, der drahtlos Schaltsignale einem Empfänger übermittelt, der mit einem Motorschalter in Motornähe kombiniert ist.

2. Motorisch angetriebenes Gartengerät mit einer Sicherheitsschaltvorrichtung nach Anspruch 1,
dadurch gekennzeichnet, daß die Schaltsignale durch Infrarotstrahlung oder durch Funk oder durch Ultraschall übertragen werden.

3. Motorisch angetriebenes Gartengerät mit einer Sicherheitsschaltvorrichtung nach Anspruch 1 und 2,
dadurch gekennzeichnet, daß der Sender durch eine Batterie gespeist wird, die am Führungsgriff angeordnet ist.

4. Motorisch angetriebenes Gartengerät mit einer Sicherheitsschaltvorrichtung nach den Ansprüchen 1 bis 3, bei der ein Totmannschalter vorgesehen ist, der erfaßt und erfaßt gehalten werden muß, um den Motorschalter einzuschalten und in der Einschaltstellung zu halten,
dadurch gekennzeichnet, daß das Betätigungsglied des Totmannschalters als Tastschalter ausgebildet und im Führungsgriff integriert ist.

5. Motorisch angetriebenes Gartengerät mit einer Sicherheitsschaltvorrichtung nach den Ansprüchen 3 und 4,
dadurch gekennzeichnet, daß der Tastschalter mit dem Sender derart kombiniert ist, daß der Sender dem Empfänger ein Abschaltsignal übermittelt, sobald der oder die Tastschalter freigegeben werden.

## Claims

1. Motorised garden tool, e.g. a lawnmower or aerator, with a safety switch device with an operating element arranged on the steering handle,
**characterised in that** the operating element on the steering handle is combined with a transmitter which transmits switching signals in a wireless manner to a receiver which is combined with a motor switch, in the vicinity of the motor.

2. Motorised garden tool with a safety switch device in accordance with claim 1,
characterised in that the switching signals are transmitted by infra-red beams or by radio or by ultrasound.

3. Motorised garden tool with a safety switch device in accordance with claim 1 or 2,
characterised in that the transmitter is powered by a battery which is located on the steering handle.

4. Motorised garden tool with a safety switch device in accordance with claims 1 to 3, in which a "dead-man" safety cut-out switch is provided which must be held and kept held in order to switch on the motor and to keep it in the switched-on position,
characterised in that the operating element of the "dead-man" safety cut-out switch is designed as a button switch and is integrated into the steering handle.

5. Motorised garden tool with a safety switch device in accordance with claims 3 and 4,
characterised in that the button switch is combined with the transmitter in such a way that the transmitter sends the receiver a switch-off signal as soon as the button switch(-es) is/are released.

## Revendications

1. Appareil de jardinage à moteur, par exemple tondeuse à gazon ou aérateur/scarificateur, pourvu d'un dispositif de commutation de sécurité comprenant un organe d'actionnement placé sur le guidon, caractérisé par le fait que l'organe d'actionnement sur le guidon est combiné à un émetteur qui transmet sans fil des signaux de commutation à un récepteur combiné à un commutateur de moteur placé dans le voisinage du moteur.

2. Appareil de jardinage à moteur pourvu d'un dispositif de commutation de sécurité selon la revendication 1, caractérisé par le fait que les signaux de commutation sont transmis par faisceau infrarouge, par radio ou par ultrasons.

3. Appareil de jardinage à moteur pourvu d'un dispositif de commutation de sécurité selon les revendications 1 et 2, caractérisé par le fait que l'émetteur est alimenté par une pile, qui est disposée sur le guidon.

4. Appareil de jardinage à moteur pourvu d'un dispositif de commutation de sécurité selon les revendications 1 à 3, dans lequel il est prévu un contacteur d'homme mort, qui doit être pressé et maintenu pressé pour enclencher et maintenir enclenché le commutateur de moteur, caractérisé par le fait que l'organe d'actionnement du contacteur d'homme mort est agencé en commutateur à poussoir et est intégré dans le guidon.

5. Appareil de jardinage à moteur pourvu d'un dispositif de commutation de sécurité selon les revendications 3 et 4, caractérisé par le fait que le commutateur à poussoir est combiné avec l'émetteur de telle sorte que l'émetteur transmette un signal de coupure au récepteur, dès que le ou les commutateur(s) à poussoir est (sont) relâchés.
